# EUROPEAN PATENT APPLICATION

(11) **EP 2 472 153 A1**
(43) Date of publication of application: **04.07.2012**
(21) Application number: 10425399.2
(22) Date of filing: 28.12.2010
(51) Int. Cl.: F16K 31/06

(54) **A valve device for automatically supplying two different flow rates of a gaseous fluid**

(71) Applicant: Gruppo Cimbali S.p.A., 20082 Binasco (MI) (IT)
(72) Inventor: Maver, Marino, 20082 Binasco, MI (IT)
(74) Representative: Perani, Aurelio

(57) **Abstract**

A valve device (1) for supplying two different flow rates of a gaseous fluid comprises a tubular body (8) provided with an internal cavity (11, 12), an inlet opening (40) for the fluid flowing into the cavity (11), an outlet opening (57) for the fluid coming out of the cavity (11), a connecting path (35, 32, 33, 32a, 30) formed in the cavity (11) between the inlet opening (40) and the outlet opening (57), as well as means for varying the cross-section for the flow of the fluid in the connecting path. The means comprise a first calibrator element (38) which can be inserted in and removed from a first portion (35) of the connecting path, as well as a second calibrator element (55) which can be inserted in and removed from a second portion (30) of the path, the first and second calibrator elements (38, 55) being able to vary the cross-section for the flow of the fluid by means of electromagnetic control members (19, 20) controlled by a control unit (67), the second connecting path portion (30) being in series with the first path portion (35), according to the direction of flow of the fluid.

## Description

The present invention relates to a valve device for supplying two different flow rates of a gaseous fluid, the device comprising a tubular body provided with an internal cavity, an inlet opening for the fluid flowing into the cavity, an outlet opening for the fluid coming out of the cavity, a connecting path formed in the cavity between the inlet opening and the outlet opening, as well as means for varying the cross-section for the flow of the fluid in the connecting path.

The gaseous fluid comprises both steam and ambient air which are directed to a user. The ambient air is preferably drawn in by means of a pump positioned downstream of the valve device which is used, preferably but not exclusively, in a machine for preparing flavoured beverages, for example milk, in which two different flavours are used and the beverage, which is frothed by means of air, may be required hot or cold.

To prepare flavoured beverages frothed with air, it is necessary to provide for respective different regulations of the air flow for the various types of flavour used. According to the prior art, to comply with this need, the solution is to use a so-called proportional solenoid valve. An electronic control unit connected to the solenoid valve adjusts the regulation thereof in order to supply a flow rate of air for a given period of time according to the selected beverage flavour.

Since proportional solenoid valves are quite expensive, their use is justified in apparatus with many types of beverage but not for less complex machines in which, for example, only two different types of flavoured beverage are supplied.

The objective of the present invention is to provide an electromagnetically operating valve device which, whilst having a good degree of functional reliability, is inexpensive and can supply, alternatively, two different flow rates of gaseous fluid, preferably air, each flow rate also being regulable.

This objective is achieved by a valve device which is characterized in accordance with appended Claim 1.

The invention will now be described in greater detail with reference to a preferred embodiment thereof which is described purely by way of non-limiting example and illustrated in the appended drawings, in which:
Figure 1 is a longitudinal section through the solenoid valve in its position for delivering a first flow rate of gaseous fluid; and
Figure 2 shows the valve of Figure 1 in its position for delivering a second flow rate of gaseous fluid.

With reference to the above-mentioned drawings, a box-like body suitable for holding the members of the valve device according to the invention is indicated 1.

The body defines an internal cavity 2 extending predominantly longitudinally along the axis X-X of the device with end openings 3 and 4. The opening 3 is closed by a cap 5 provided with an axial hole 6 inside which a thread 7 is formed.

A first tubular, cylindrical body 8 is inserted in the cavity 2 through the opposite opening 4 of the box-like body 1 and has a threaded portion 9 at one end and a head 10 at the opposite end. The cylindrical body 8, together with the head 10, is provided, in its interior, with a first axial cavity 11 and a second axial cavity 12 having a smaller diameter than the first axial cavity 11. Whereas the first axial cavity 11 extends inside the head 10 terminating in an opening 13, the second axial cavity 12 extends in alignment with the cavity 11 along the axis X-X from an internal abutment 14 as far as an open end 15 of the threaded portion 9.

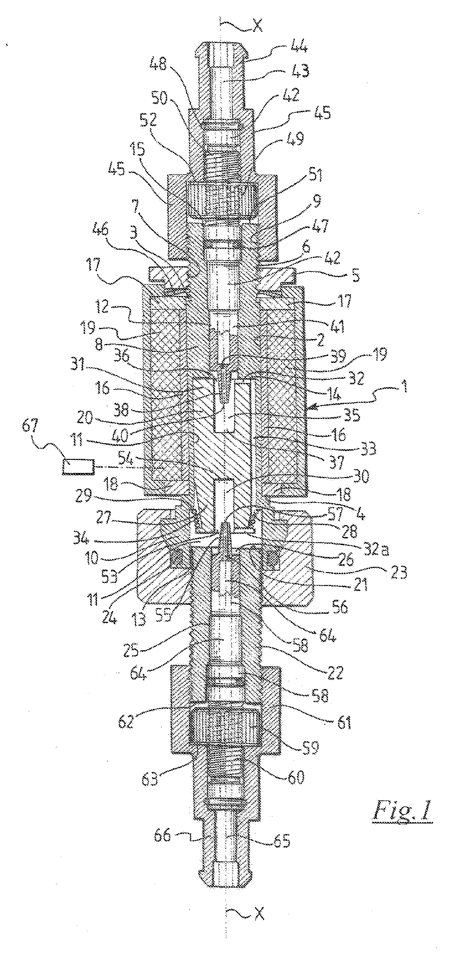

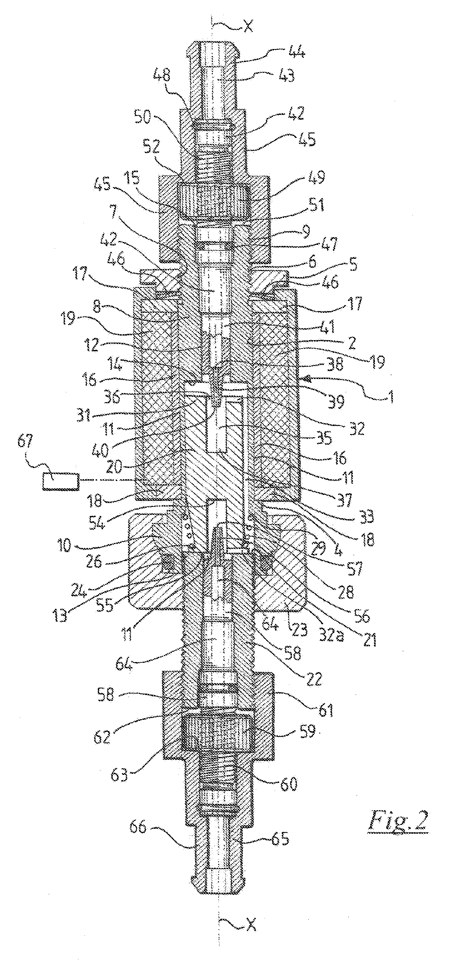

As can be seen in Figures 1 and 2, the cylindrical internal wall of the cavity 2 is delimited by a conventional reel 16 with end shoulders 17 and 18 on which an electromagnetic coil 19 is mounted.

A ferromagnetic core 20 is positioned so as to be slidable along the axis X-X inside the cavity 11 of the tubular, cylindrical body 8 and is movable between the abutment 14 which defines a first position for the core and a second reference abutment 21 which defines a second position for the core. The reference abutment 21 is represented by the end of a second tubular body 22 which is inserted in the cavity 11 of the head 10 in alignment with the axis X-X of the device.

The second tubular body 22 extends through a cap 23 which is engaged on the head 10 and covers the opening 13 of the axial cavity 11 of the first cylindrical body 8 with the interposition of a seal 24.

The second tubular body 22 is provided with an axial cavity 25 an opening 26 of which opens into the cavity 11 in front of an end 27 of the core 20.

As will be explained below, in operation, when the coil 19 is not energized, the end 27 of the ferromagnetic core 20 is intended to abut the reference abutment 21 under the action of a helical spring 28 which urges the core 20 towards that abutment.

The spring 28 is anchored at one end to the end 27 of the core 20 and, at the other end, reacts against an annular abutment 29 of the head 10.

The core 20 has a blind hole 30 at its end 27.

The opposite end 31 of the ferromagnetic core 20, which is intended to abut the annular abutment 14 between the cavity 11 and the cavity 12 of the body 8, has a diametral or even purely radial groove 32 which is connected to a faceting 33 which extends axially along the core 20 as far as the vicinity of the end 27 where the core 20 has a tapered portion 34 as well as a radial groove 32a.

The spring 28 is wrapped around the tapered portion 34. In the end 31 of the ferromagnetic core 20 there is a cylindrical blind hole 35 with an opening 36 facing towards the abutment 14 and with a closed base 37.

A first calibrator element 38 is positioned axially in the blind hole 35.

The first calibrator element 38 has an outer surface the diameter of which varies in the axial direction, particularly with a conical or even stepped configuration.

Alternatively, the external configuration of the calibrator element 38 may be cylindrical and the blind hole 35 may have a conical configuration.

The first calibrator element 38 has an internal hollow duct 39 with an opening 40 which opens into the interior of the blind hole 35 and the calibrator element 38 is fitted on a first rod-like support element 41.

The rod-like support element 41 also has an axial cavity 42 which is connected, at one end, to the duct 39 of the calibrator element 38 and, at the other end, to the internal duct 43 of a connector 44 forming part of a first sleeve 45. The sleeve 45 is connected to the threaded portion 9 of the body 8 that projects from the cap 5 which closes the box-like body 1 and clamps the reel 16 of the electromagnetic coil 19 with the interposition of a resilient washer 46.

A first seal 47 is provided between the rod-like support 41 and the axial cavity 12 and a second seal 48 is positioned between the rod-like support 41 and the internal wall of the sleeve 45.

The rod-like support 41 is provided with a device for adjusting its axial position inside the cavity 12 in order to set the position of the first calibrator element 38 relative to the tubular body 8, with reference to the abutment 14 which the end 31 of the ferromagnetic core 20 is intended to abut when the coil 19 is energized.

This axial adjustment device comprises a first ring nut 49 and a threaded portion 50 formed on the outer surface of the rod-like element 41, on which the ring nut is mounted.

The ring-nut 49 is positioned inside the sleeve 45 between an end 51 of the threaded portion 9 of the body 8 and an abutment 52 inside the sleeve 45.

The ring nut 49 can be operated by virtue of lateral openings, not shown in the drawings, which are formed in the sleeve 45 and enable the outer surface of the ring-nut 49, which is preferably knurled, to be gripped. The rod-like support 41, and with it the calibrator element 38, can be moved in the cavities 11 and 12 of the tubular body 8 by rotation of the ring-nut 49.

The coil 19 is connected, in conventional manner, to electrical supply terminals, not shown in the drawings. In similar manner to the blind hole 35, the blind hole 30 also has an opening 53 facing towards the end 21 of the second tubular element 22 and a closed base 54.

A second calibrator element 55 is positioned axially in the blind hole 30. In similar manner to the first calibrator 38, the second calibrator element 55 has an outer surface the diameter of which varies in the axial direction, particularly with a conical, or even stepped, configuration.

Alternatively, the external configuration of the calibrator element 55 may be cylindrical and the blind hole 30 may have a conical configuration.

The second calibrator element 55 has an internal hollow duct 56 with an opening 57 which opens into the blind hole 30, and the second calibrator element 55 is fitted on a second rod-like support element 58.

The second rod-like support element 58 is provided with a second device for adjusting its axial position inside the cavity 11 in order to set the position of the second calibrator element 55 relative to the tubular body 22, with reference to the abutment 21 which the end 27 of the ferromagnetic core 20 is intended to abut when the coil 19 is in the non-energized condition and the core 20 is acted on by the spring 28.

The second axial adjustment device comprises a second ring nut 59 and a threaded portion 60 formed on the outer surface of the rod-like element 58, on which the ring nut is mounted.

The ring nut 59 is positioned inside a second sleeve 61 between an end 62 of the second tubular body 22 and an abutment 63 inside the sleeve 61.

The ring nut 59 can also be operated by virtue of lateral openings, not shown in the drawings, which are formed in the sleeve 61 and enable the outer surface of the ring-nut 59, which is preferably knurled, to be gripped. The second rod-like support 58, and with it the second calibrator element 55, can be moved in the cavity 11 of the head 10 by rotation of the ring nut 59.

The support element 58 of the second calibrator element 55 is also provided with an axial cavity 64 which is connected, at one end, to the duct 56 of the second calibrator element 55 and, at the other end, to an internal duct 65 of a connector 66 forming part of the second sleeve 61.

It will be appreciated from the foregoing description that a connecting path is defined between the inlet opening to the cavity 11, represented by the open end 40 of the first calibrator element 38, and the open end 57 of the second calibrator element 55 which constitutes the outlet opening from the cavity 11; the connecting path comprises a first portion constituted by the annular space between the blind hole 35 and the first calibrator element 38, the radial groove 32, the axial faceting 33 of the core 20, and the radial groove 32a, and a second portion constituted by the annular space between the blind hole 30 and the second calibrator element 55.

The first and second portions of the connecting path are thus in series with one another, with reference to the direction of flow of the gaseous fluid.

The first calibrator element 38 and the second calibrator element 55 are inserted in the connecting path in series with one another, with reference to the direction of flow of the fluid from the external connector 44 towards the external connector 66.

According to the positions adopted by the core 20, and hence in dependence on whether or not the coil 19 is energized, when the first calibrator 38 penetrates more or less deeply into the blind hole 35, the second calibrator 55 simultaneously emerges to a greater or lesser extent from the blind hole 30.

Since, as described above, the calibrator elements 38 and 55 have conical external profiles which are tapered towards their respective open ends or, alternatively, have outside diameters which decrease towards the open ends, their various positions relative to the blind hole 35 and to the blind hole 30 determine different cross-sections for the flow of the gaseous fluid in transit from the inlet opening 40 towards the outlet opening 57. In particular, when the coil 19 is not energized and hence when the core 20 is positioned against the abutment 21, as shown in Figure 2, the cross-section for the flow of the fluid is established by the relationship between the second calibrator 55 and the blind hole 30, whilst at the same time, the positional relationship between the first calibrator element 38 and the blind hole 35 is arranged so as to give the passageway an area such as not to interfere with the functional capacity adopted by the valve device.

The regulation of the second calibrator element 55 can therefore be arranged for the supply of a first flow rate of gaseous fluid, particularly air, to a first user, for example, for the preparation of a beverage with a first type of flavouring product.

When, on the other hand, the coil 19 is energized and the core 20, as shown in Figure 1, is positioned against the abutment 14 which delimits the passageway between the axial cavity 11 and that indicated 12, the valve device can supply a different flow rate of gaseous fluid, for example air, to be sent to a different user in which a beverage with a different flavouring ingredient is prepared.

This different flow-rate of gaseous fluid is determined by the position of the first calibrator element relative to the walls of the blind hole 35 whereas the second calibrator element 55, since it is practically outside the second blind hole 30, does not result in any particular restriction of the flow of the gaseous fluid. According to the invention, the area of the flow cross-section between the first calibrator element and the blind hole 35 and the area of the flow cross-section between the second calibrator element 55 and the blind hole 30 are determined on the basis of the amount of operative flow that is necessary for the users which are connected alternatively to the outlet connector 66, the connector 44 being intended for connection to the source of the gaseous fluid.

Each flow area value is achieved by operation of the adjustment ring nuts 49 and 59, taking account of the positions adopted by the core 20.

Once the operative flow cross-sections have been established, the movement of the core 20 as a result of the excitation of the coil 19 or under the action of the spring 28 leads to a change in the relative positions of the calibrator elements and the respective blind holes. With the valve device described above, the flow-rate of a gaseous fluid, in particular aspirated air, can be regulated to two different values for supplying two users alternatively.

The control of the valve device is entrusted to a conventional electronic control unit shown schematically at 67. The control unit is also concerned with the activation and de-activation of the coil 19.

## Claims

1. A valve device (1) for supplying two different flow rates of a gaseous fluid, the device comprising a tubular body (8) provided with an internal cavity (11, 12), an inlet opening (40) for the fluid flowing into the cavity (11), an outlet opening (57) for the fluid coming out of the cavity (11), a connecting path (35, 32, 33, 32a, 30) formed in the cavity (11) between the inlet opening (40) and the outlet opening (57), as well as means for varying the cross-section for the flow of the fluid in the connecting path, **characterized in that** the means comprise a first calibrator element (38) which can be inserted in and removed from a first portion (35) of the connecting path, as well as a second calibrator element (55) which can be inserted in and removed from a second portion (30) of the path, the first and second calibrator elements (38, 55) being able to vary the cross-section for the flow of the fluid by means of control members (19, 20) controlled by a control unit (67), the second connecting path portion (30) being in series with the first path portion (35), according to the direction of flow of the fluid.

2. A valve device according to Claim 1, **characterized in that** the control members are electromagnetic and comprise a coil (19) and a respective movable ferromagnetic core (20), and **in that** the connecting path (35, 32, 33, 32a, 30) is formed at least partly in the movable core (20), **in that** the first calibrator element (38) is positioned in a first portion (35) of the connecting path which is formed in one end (31) of the core (20), **in that** the second calibrator element (55) is positioned in a second portion (30) formed in the other end (27) of the core (20), the core (20) being movable relative to the calibrator elements (38, 55) between a first position and a second position as a result of the electrical activation and deactivation of the coil (19), determining respective cross-sections for the flow of the fluid, each having a respective area value.

3. A valve device according to Claim 2, **characterized in that** the calibrator elements (38, 55) are mounted on respective rod-like supports (41, 58) the axial cavities (42, 64) of which form parts of the duct for the inlet of the fluid into the cavity (11) and for the outlet of the fluid therefrom.

4. A valve device according to Claims 1 to 3, **characterized in that** the calibrator elements (38, 55) are constituted by axially hollow, rod-like elements aligned with the axial cavities (42, 64) of the respective supports (41, 58), to which they are connected.

5. A valve device according to Claims 1 to 4, **characterized in that** the rod-like calibrator elements (38, 55) have circular cross-sections with outside diameters which decrease towards their open ends (40, 57).

6. A valve device according to Claim 5 wherein the outer surfaces of the calibrator elements (38, 55) are conical, tapering towards the open ends (40, 57).

7. A valve device according to Claims 1 to 6, **characterized in that** the first and second portions of the connecting path between the inlet opening (40) and the outlet opening (57) of the cavity (11) that is formed in the core (20) of the electromagnet comprise respective blind holes (35, 30) which are arranged parallel to the axis (X-X) of the movement of the core (20) between the first position (14) and the second position (21) and coaxial with the respective calibrator elements (38, 55), the latter being positioned in the respective blind holes (35, 30) with clearance relative to respective bases (37, 54) and to side walls thereof.

8. A valve device according to Claims 1 to 7, **characterized in that** the supports (41, 58) of the respective calibrator elements (38, 55) are housed in respective axial cavities (12, 25) of respective tubular bodies (8, 22) positioned parallel to the axis (X-X) of movement of the core (20) of the electromagnet, and are provided with means (49, 59) for adjusting their respective axial positions relative to the core (20).

9. A valve device according to any one of Claims 1 to 8, **characterized in that** it comprises resilient means (28) acting on the core (20) of the electromagnet to urge it towards the second position (21) and to hold it therein when the coil of the electromagnet is not electrically activated, the resilient means (28) releasing the core (20) when the coil (19) is activated and the core (20) is moved axially to its first position (14).
